# EUROPEAN PATENT SPECIFICATION

(11) **EP 2 976 207 B1**
(45) Date of publication and mention of the grant of the patent: **31.07.2019**
(21) Application number: 14723114.6
(22) Date of filing: 21.03.2014
(51) Int. Cl.: B29C 49/42

(54) **APPARATUS FOR OBTAINING PLASTIC CONTAINERS**
VORRICHTUNG ZUR GEWINNUNG EINES KUNSTSTOFFBEHÄLTERS
APPAREIL PERMETTANT D'OBTENIR DES CONTENANTS EN PLASTIQUE

(30) Priority: 22.03.2013 IT VR20130070
(43) Date of publication of application: 27.01.2016
(73) Proprietor: Sacmi Imola S.C., 40026 Imola (IT)
(72) Inventor: MARASTONI, Daniele, I-40017 San Giovanni In Persiceto (IT); RAGGI, Mirko, I-40024 Castel San Pietro Terme (IT)
(74) Representative: Modiano, Micaela Nadia
(86) International application number: PCT/IB2014/060026
(87) International publication number: WO 2014/147592

(56) References cited:
- EP-A1- 2 030 759
- EP-A1- 2 258 534
- DE-A1-102007 037 400
- DE-A1-102010 022 126

## Description

Apparatuses for obtaining plastic containers are known and are widely used. Related apparatuses and methods are describes in documents DE10 2007 037400A1 and EP2258 534A1.

Typically such apparatuses, also known as blow-molding machines, comprise a device for feeding plastic preforms, a device for heating the preforms picked up by the feeding device, and a device for transferring the heated preforms from the heating device to a blow-molding device, which is adapted to provide, starting from such preforms, respective containers.

Blow-molding machines are generally complete with a device for unloading the containers from the blow-molding device.

Specifically, blow-molding machines have means of transferring the preforms from the feeding device to the blow-molding device.

Such transfer means are usually constituted by a supporting framework for a plurality of grip chucks.

Such grip chucks can be moved along a movement circuit and are intended to carry a respective preform picked up by the feeding device to the heating means, which are constituted typically by one or more heating tunnels, in order to transport it, when heated, to the transfer device and, then, to the blow-molding device.

Delving deeper into the details, the grip chucks have, in a downward region, a respective retention head, which comprises at least one retention element that is designed to lock the neck of a respective preform into position.

Usually, the retention element comprises a supporting body, which is deformable in a radial direction and can be inserted in the neck of a respective preform, and an abutment body, also known as a beaker, for axial positioning and advantageously for unloading the heated preform onto the transfer device.

Usually the supporting body is caused to rotate about an axis that is parallel to the longitudinal axis of the chuck so as to ensure, while passing through the heating tunnel or tunnels, a uniform heating of the whole preform.

Very often, the same blow-molding machine is used to produce containers of different shapes and/or sizes.

For this reason, before beginning a new production, the blow-molding device had to be adjusted, in essence by replacement of the molds of the containers.

Traditionally the preforms to be used on each blow-molding machine (even if they were destined for the production of different containers) had the same "neck" and this made it unnecessary, at each change of format of the container, to adjust the grip chucks.

Recently the need has emerged to use the same blow-molding machine to produce containers that not only have different shapes or sizes but also different necks.

Evidently, this involves the necessity, in addition to changing the blow-molding devices, of which however there are a relatively low number (approximately 8-24 for each blow-molding machine), to also substitute the retention elements associated with each grip chuck.

Such operation is nowadays carried out manually and involves the removal of the retention elements (of which there are usually two, the body for supporting the neck and the abutment body or beaker): on average, for such substitution operation, between 40 and 50 seconds are needed for each grip chuck.

Considering that each blow-molding machine has between 300 and 600 grip chucks, it is clear that every change of format of the retention elements involves a machine shutdown time comprised between 3.5 hours and 8 hours, and such times are utterly incompatible with production needs.

The aim of the present invention is to eliminate, or at least to drastically reduce, the above-mentioned drawbacks.

Within this aim, an object of the invention is to provide an apparatus for providing plastic containers that makes it possible, if necessary, to perform a change of format of the retention elements of the grip chucks in an extremely short time.

This aim and these and other objects which will become more apparent hereinafter are all achieved by an apparatus for providing plastic containers according to claim 1 and a method according to claim 12.

Further characteristics and advantages of the invention will become more apparent from the description of a number of preferred but not exclusive embodiments of an apparatus for providing plastic containers according to the invention, which are illustrated by way of non-limiting example in the accompanying drawings wherein:

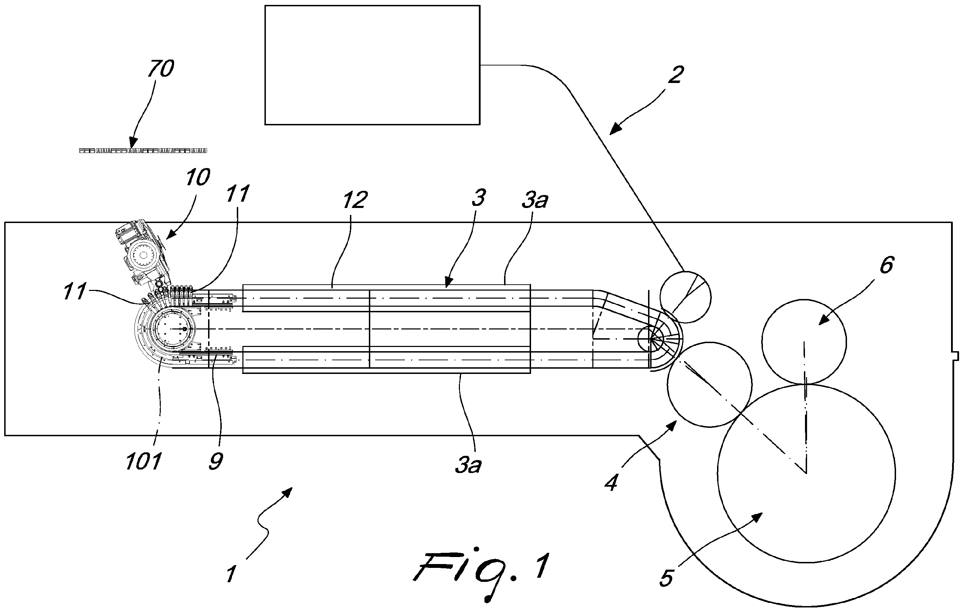

Figure 1 is a schematic view from above of an apparatus for providing plastic containers according to the invention;

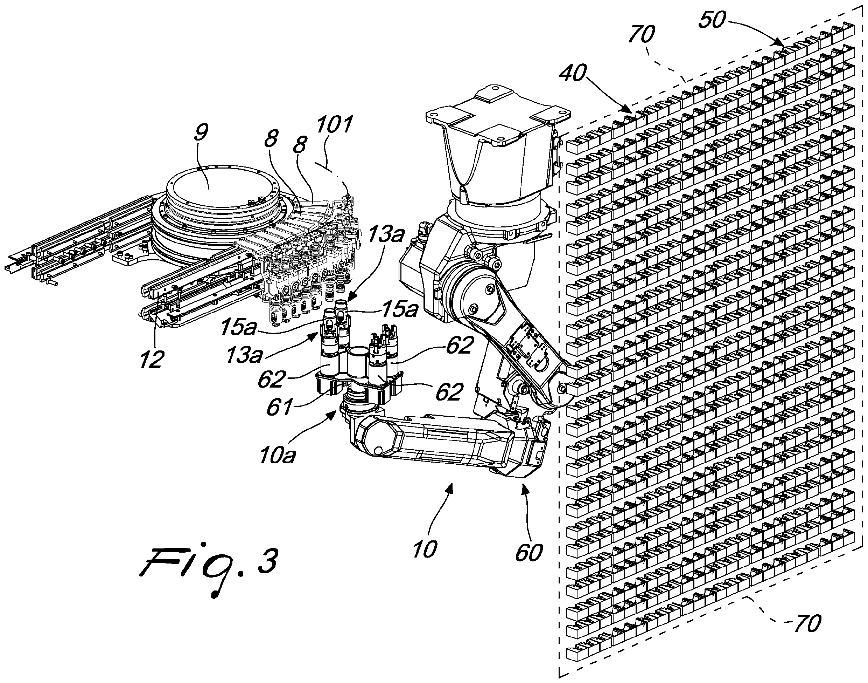

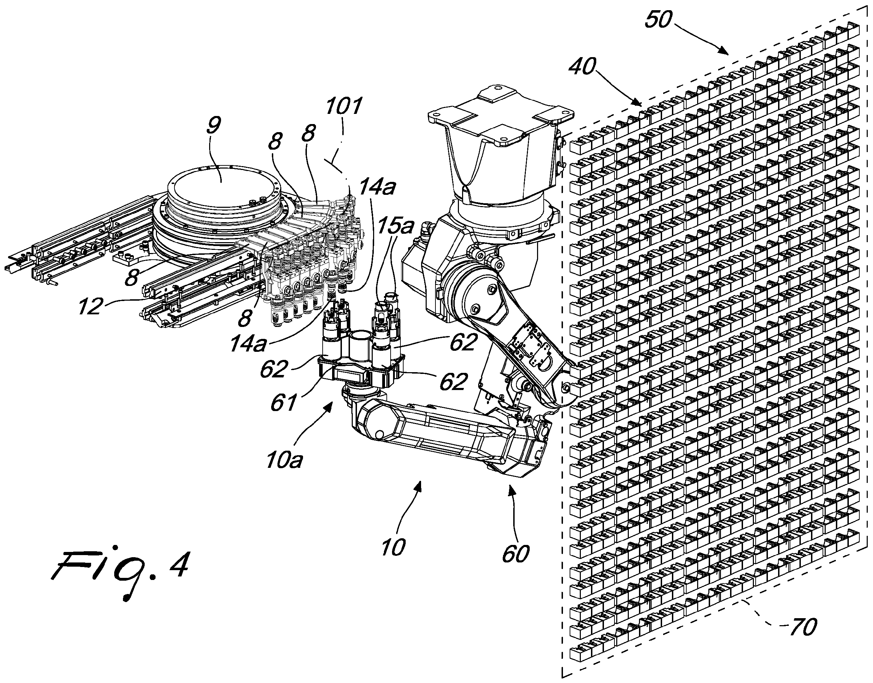

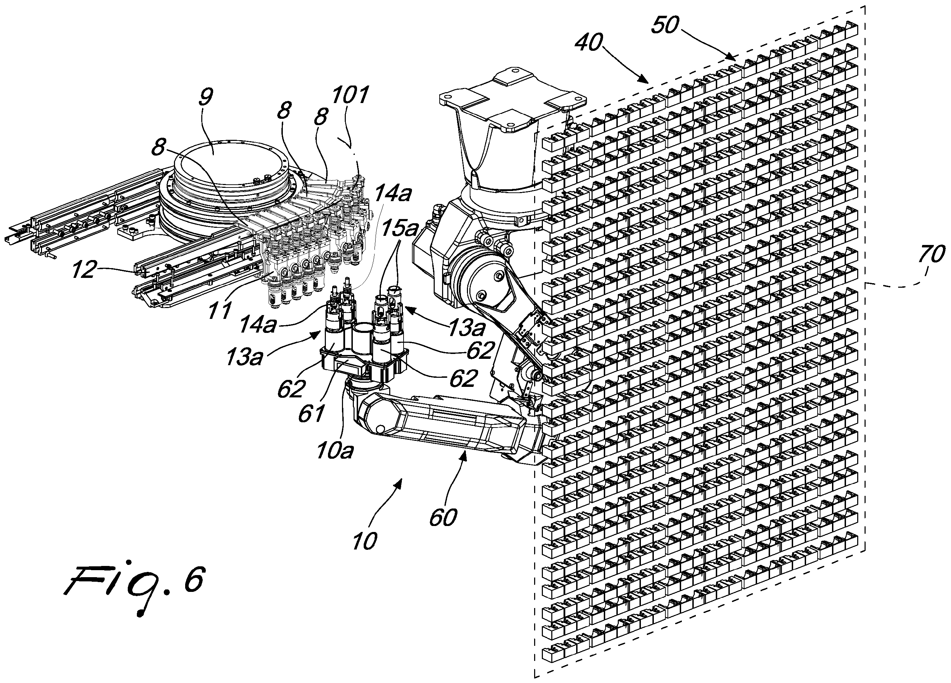

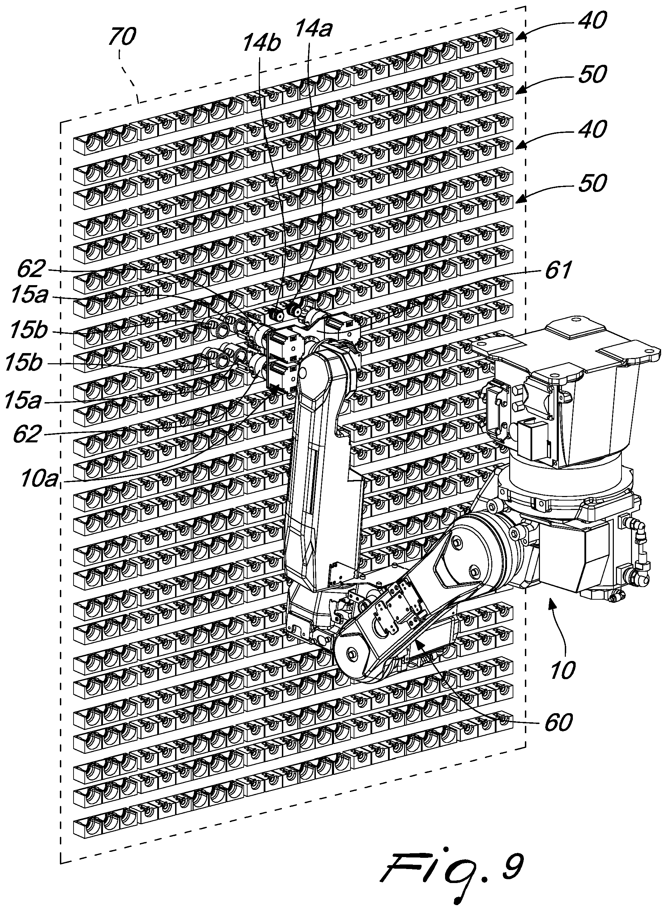

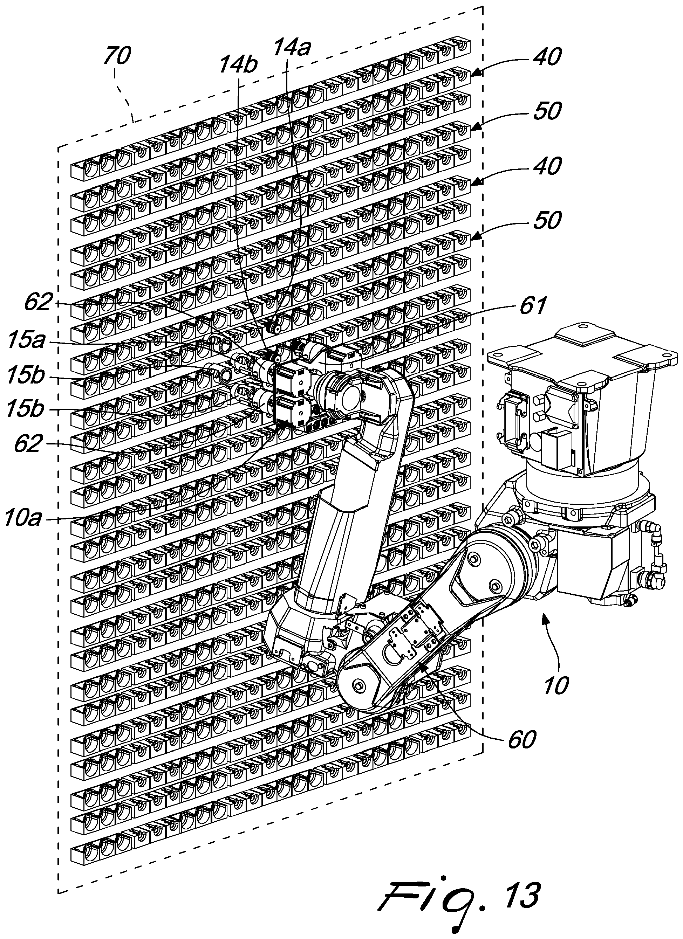

Figures 2 to 13 are perspective views showing, in sequence, the steps of removal and storage of the retention elements to be replaced on the grip chucks;

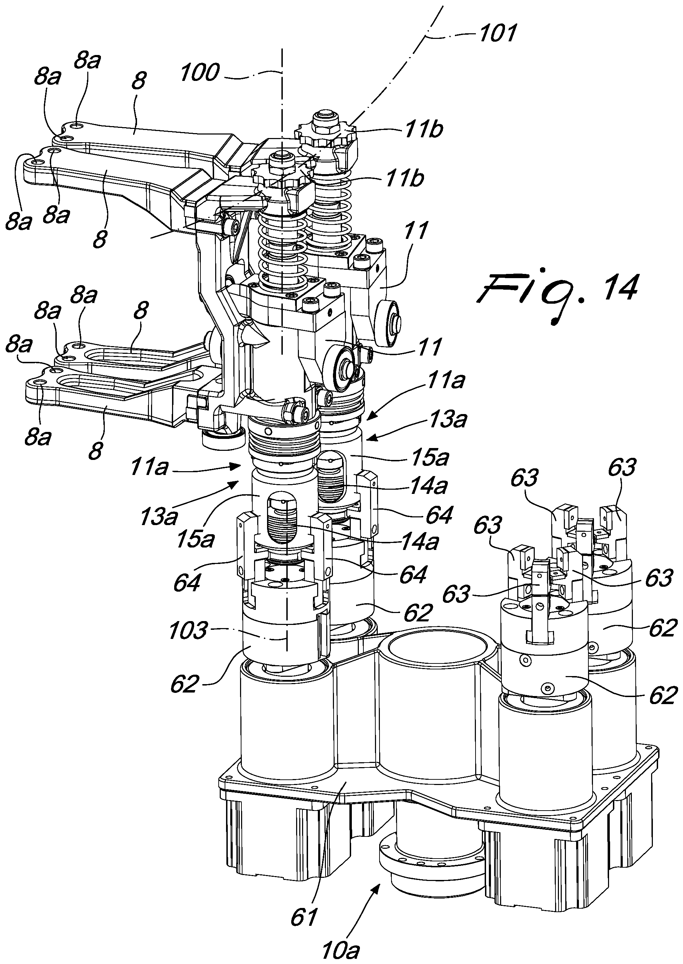

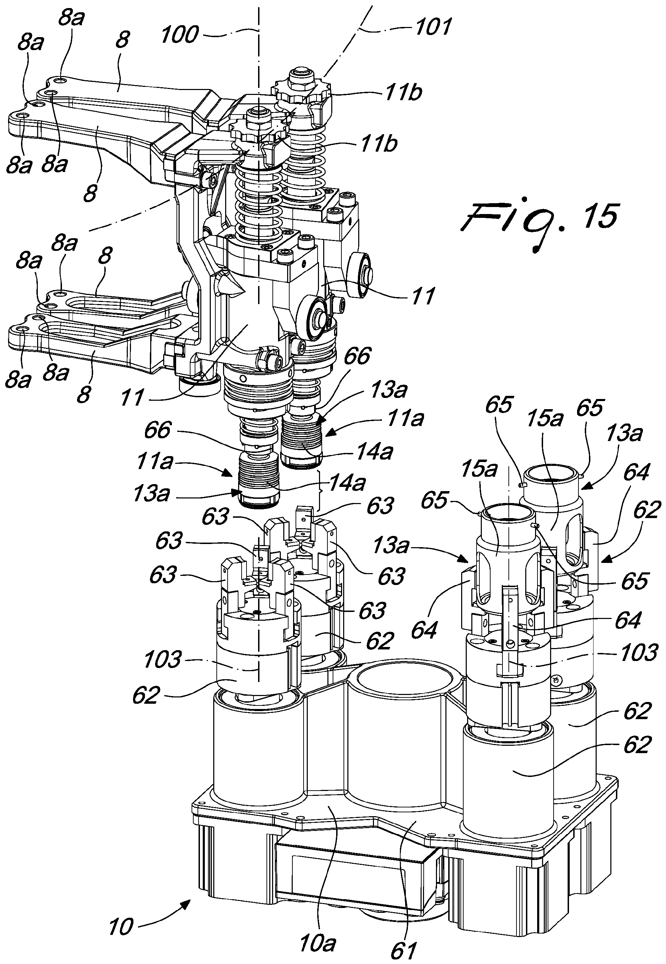

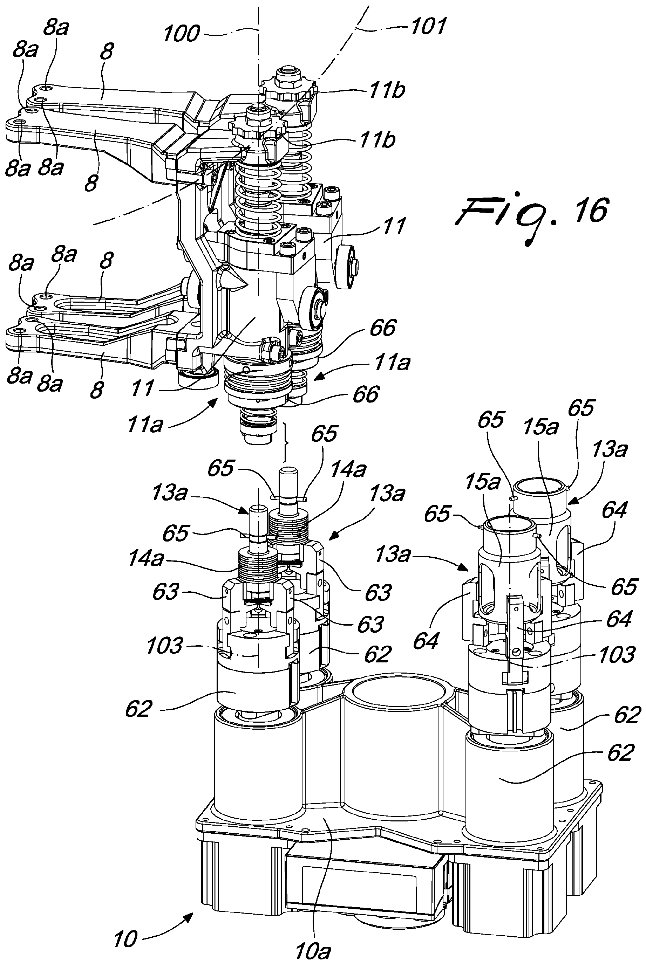

Figures 14, 15 and 16 are enlarged-scale perspective views of the automated means engaged with the grip chucks; and

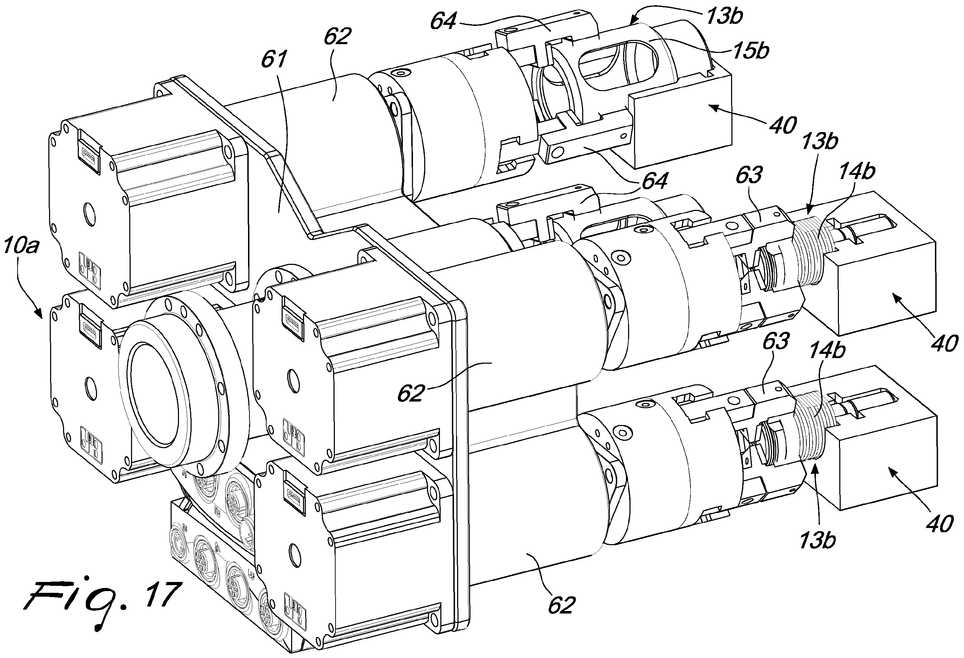

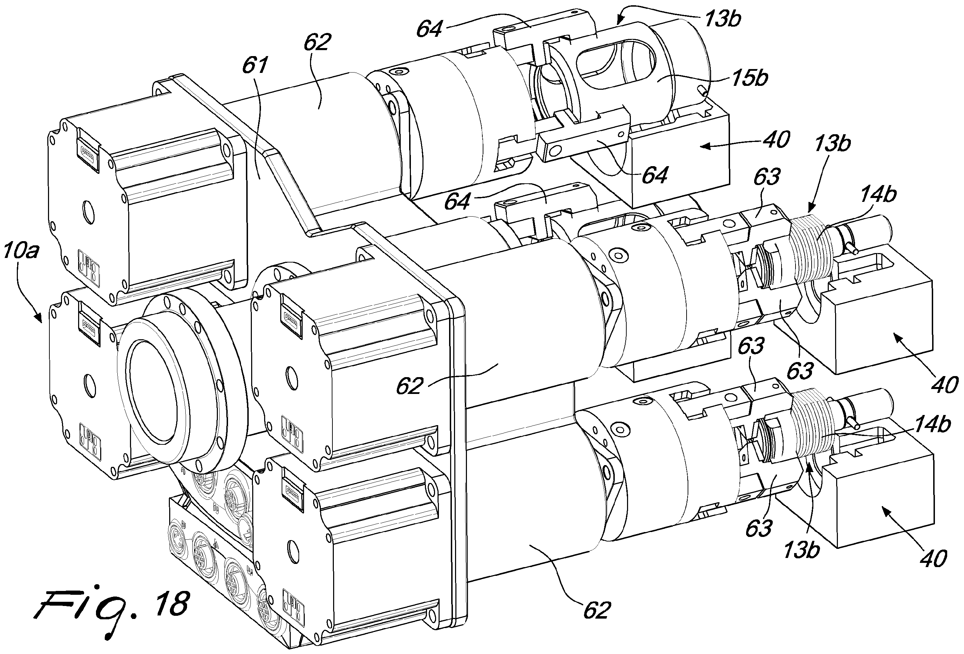

Figures 17 and 18 are enlarged-scale perspective views of the automated means proximate to the storage and pick-up region.

The present invention relates to an apparatus for providing containers, which is generally indicated with the reference numeral 1.

The apparatus 1 comprises a device 2 for feeding plastic preforms, a device 3 for heating the preforms picked up by the feeding device 2, a device 4 for transferring the heated preforms from the heating device 3 to a blow-molding device 5 which is adapted to provide, starting from the heated preforms, respective containers by blow-molding.

Typically, the apparatus 1 is provided with a device 6 for unloading the containers from the blow-molding device 5.

Delving deeper into the details, the apparatus 1 comprises a supporting framework 9 for a plurality of grip chucks 11, which can be moved along a movement circuit 12 and are intended to carry a respective preform picked up by the feeding device 2 to the heating means 3 in order to transport it, when heated, to the transfer device 4.

For the purpose of example, the heating means 3 can comprise one or more heating tunnels 3a which can be traversed by the preforms supported by the grip chucks 11 during their movement along the movement circuit 12.

The grip chucks 11 have a respective retention head 11a, which comprises at least one retention element 13a, 13b that is designed to lock the neck of a respective preform into place.

According to the present invention, along the extension 101 of the movement circuit 12 there are automated means 10 for changing the retention elements 13a.

Such automated means 10 are associated or removably associable with the apparatus 1.

In particular, the automated means 10 are adapted to remove and store the retention elements 13a to be replaced and to pick up, and couple to a respective grip chuck 11, retention elements 13b that are different from the retention elements 13a to be replaced.

Advantageously, the retention element 13a, 13b comprises a supporting body 14a, 14b of the neck of a respective preform, and an abutment body 15a, 15b, also known as a beaker, for axial positioning and/or unloading of the heated preform onto the transfer device 4.

Typically, the supporting body 14a, 14b comprises a radially compressible/expandable head that can be inserted, by interference, in the neck of the preform, while the abutment body 15a, 15b can be constituted by a beaker-like body which is provided with a lower abutment edge that can be moved axially with respect to the supporting body 14a, 14b in order to axially position and/or unload the heated preform onto the transfer device 4.

According to a first embodiment, the automated means 10 are adapted to change the supporting body 14a or the abutment body 15a.

Advantageously, the automated means 10 are adapted to change both the supporting body 14a and the abutment body 15a.

The forming spindle 11 is connected kinematically, for example by means of a gear 11b, to first motor means, which are adapted to actuate the angular rotation, about the longitudinal axis 100 of the grip chuck 11, of at least one portion of the retention element 13a, 13b so as to support in rotation, about an axis parallel to the longitudinal axis 100 of the grip chuck 11, the preform, thus ensuring a uniform heating thereof.

As illustrated, the first motor means are adapted to actuate the angular rotation, about the longitudinal axis 100 of the supporting body 14a, 14b and, consequently, of the preform that is integrally associated with it.

With reference to the embodiment shown, each grip chuck 11 is connected to a supporting element 8, conveniently C-shaped, which can be moved on command along the extension 101 of the movement circuit 12 thanks to the action of entrainment means, not shown, which are constituted, for example, by a first chain provided with movement pins that pass through respective openings 8a defined in the supporting elements 8.

With reference to such embodiment, the first motors can be constituted by a second chain, which extends along the movement circuit 12, intended to be meshed, during the movement of the grip chucks 11 along the movement circuit 12, by the respective gearwheels 11b with the consequent rotation of the respective supporting body 14a, 14b.

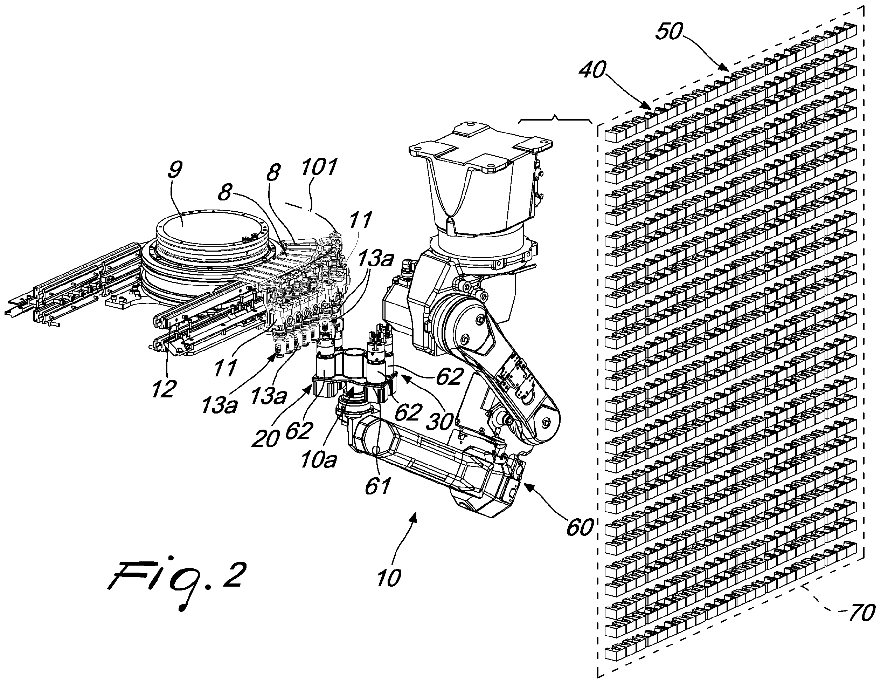

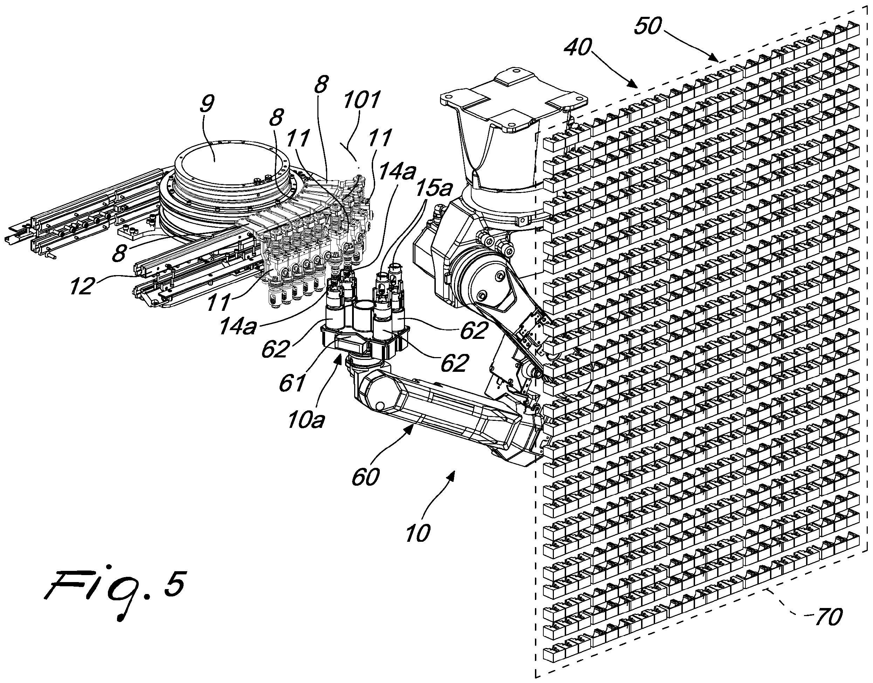

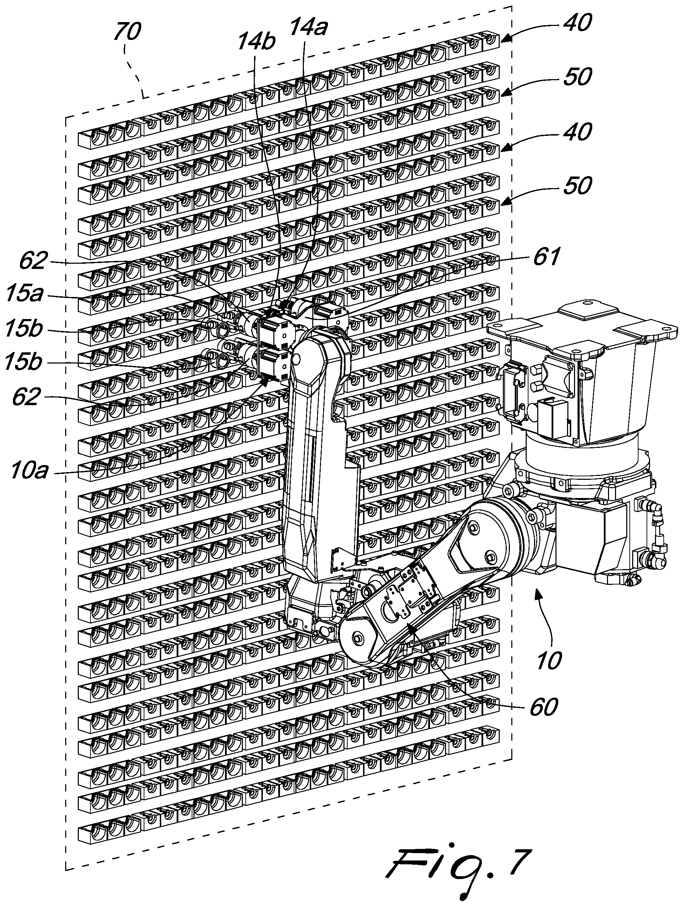

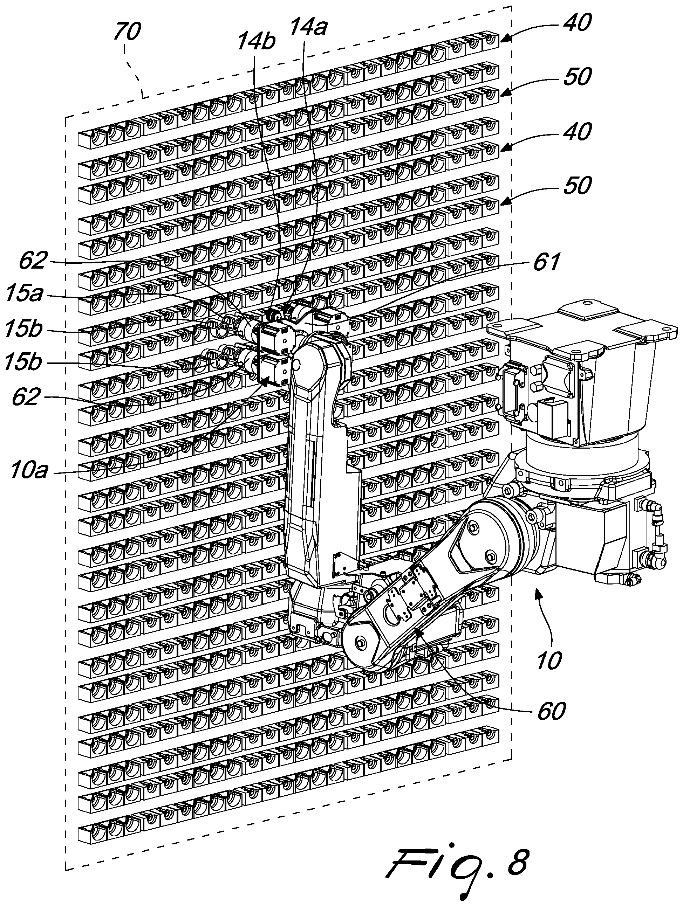

The automated means 10 comprise an unloading device 20, which can be moved on command between a working position (shown in Figures 2 and 5) in which it is intended to remove at least one retention element 13a from a respective grip chuck 11, and an unloading position (shown in Figures 7 and 8) in which it stores, at a storage region 40, the retention element or elements 13a removed by the respective grip chuck 11.

The automated means 10 comprise, furthermore, a loading device 30.

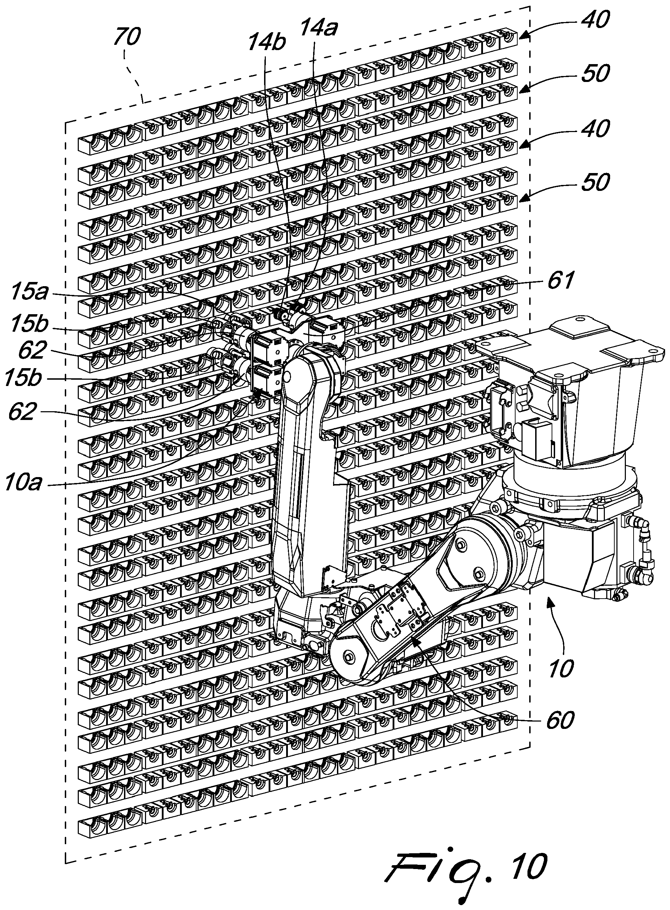

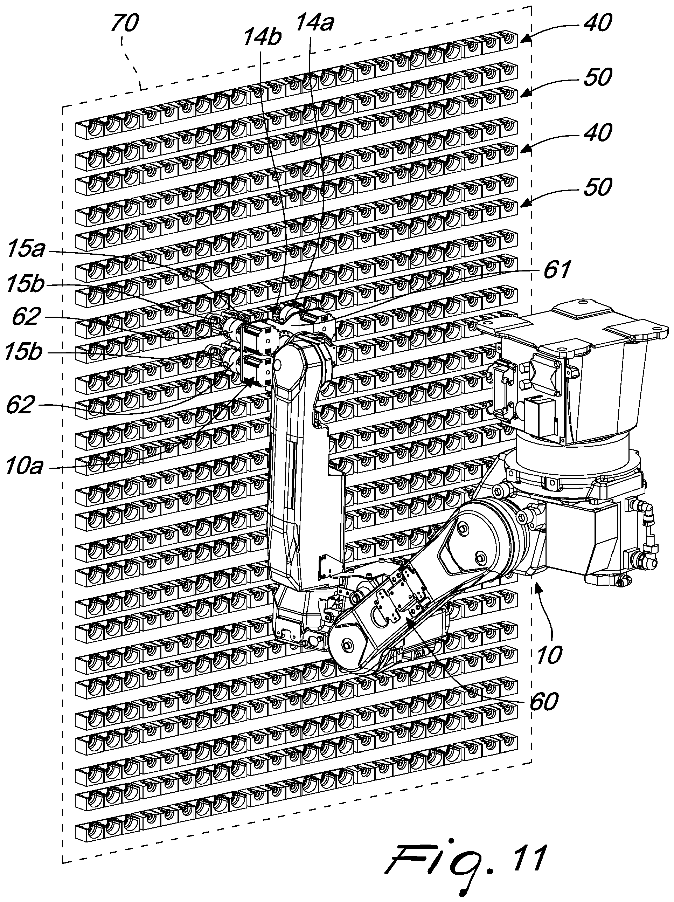

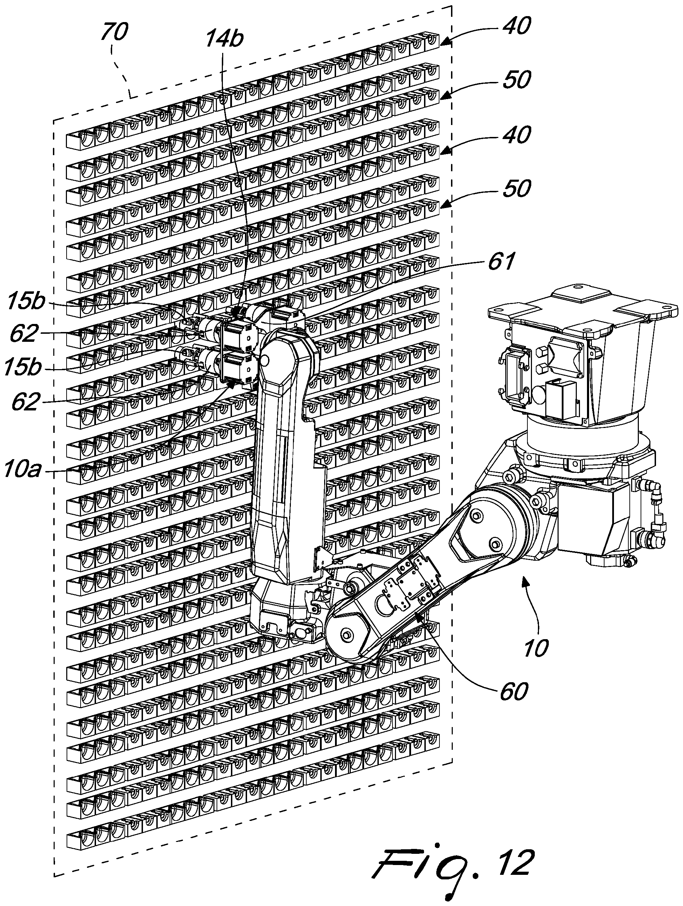

Such loading device 30 in turn can be moved on command between a pick-up position (shown in Figures 10 to 12) in which it is intended to pick up at least one retention element 13b from a pick-up region 50, and a replacement position (shown in Figures 5 and 2) in which it is intended to couple the (or each) retention element 13b, taken from the pick-up region 50, with a respective grip chuck 11.

According to a preferred embodiment, which is shown in the figures, the loading device 20 and the unloading device 30 are constituted by a single replacement element 10a.

Preferably, in order to reduce the time for the removal of retention elements 13a from the grip chucks 11, the unloading device 20, in the working position, is adapted to remove, substantially simultaneously, respective retention elements 13a associated with at least two grip chucks 11.

For example, as shown in the figures, the unloading device 20 is adapted to remove, simultaneously, respective retention elements 13a associated with two grip chucks 11.

It is possible for the unloading device 20 to be able to move between at least two distinct working positions.

In particular, in each one of the two or more working positions the unloading device 20 is adapted to remove at least one retention element 13a from at least one respective grip chuck 11.

In the embodiment shown in the figures, in each one of the two working positions the unloading device 20 is adapted to remove the retention elements 13a associated with two grip chucks 11.

In particular, such solution is advantageous if the retention elements 13a to be replaced are constituted, respectively, by a supporting body 14a and an abutment body 15a.

As shown in the figures in fact, in the first working position the unloading device 20 will proceed to remove one or more abutment bodies 15a whereas, in the second working position, it will proceed to remove one or more supporting bodies 14a.

In the replacement position, the loading device 30 is adapted to couple, substantially simultaneously, respective retention elements 13b with at least two grip chucks 11.

For example, as shown in the figures, the loading device 30 is adapted to couple, simultaneously, respective retention elements 13b with two grip chucks 11.

Preferably, as shown in the figures, the loading device 30 can assume at least two replacement positions.

In particular, in each one of the at least two replacement positions the loading device 30 is adapted to couple at least one retention element 13b with at least one respective grip chuck 11.

In the embodiment shown in the figures, in each one of the two replacement positions the loading device 30 is adapted to couple the retention elements 13b with two grip chucks 11.

In particular, such solution is advantageous if the retention elements 13b to be coupled are constituted, respectively, by a supporting body 14b and an abutment body 15b.

As shown in the figures in fact, in the first replacement position the loading device 30 will proceed to couple a respective supporting body 14b with one or more grip chucks whereas, in the second replacement position, it will proceed to couple a respective abutment body 15b with the same.

There is no reason why, obviously, such storage regions 40 and pick-up regions 50 could not be defined on surfaces that are not flat but, for example, cylindrical.

The storage region 40 and the pick-up region 50 are, advantageously, defined on a sheet-like supporting body 70.

In order to speed up the operations of changing the retention elements 13a, 13b, it is possible to arrange the storage region 40 proximate to the pick-up region 50.

Such storage regions 40 and pick-up region 50 comprise, for example, receptacles intended to contain the retention elements 13a, 13b.

Conveniently, the loading device 20 and/or the unloading device 30 are actuated by at least one articulated movement arm 60.

The replacement element 10a can be constituted, for example, by a supporting element 61 that is kinematically connected to the articulated arm 60.

The supporting element 61 supports one or more grip elements 62, which provide the unloading device 20 and the loading device 30.

Merely for the purpose of example, the supporting element 61 can be associated with two pairs of grip elements 62.

Each grip element 62 has at least one engagement element intended to remove and act on the retention elements 13a to be removed and on the retention elements 13b to be coupled to the grip chucks 11.

Merely for the purpose of example, at least one engagement element comprises first jaws 63 that can move on command in order to operate on a respective supporting body 14a, 14b.

A second engagement element supports second jaws 64 that can move on command in order to operate on a respective abutment body 15a, 15b.

Advantageously, the first pair of grip elements 62 is associated with the first jaws 63 while the second pair of grip elements 62 is associated with the second jaws 63.

Since the angular position of the supporting bodies 14a, 14b about the longitudinal axis 100 is variable, the grip element 62, and specifically the second jaws 64, are rotatable about an axis 103 that is parallel to the longitudinal axis 100.

The coupling between the end of the grip chucks 11 which defines the retention head 11a and the retention elements 13a, 13b can be varied.

By way of example, the retention elements 13a, 13b can be provided with one or more engagement pins 65 which can be inserted in a respective sliding guide 66 defined at a respective grip chuck 11.

The sliding guide 66 has a guiding portion 66a and an end accommodation portion.

In this regard, the grip elements 62 can move in order to insert and disconnect the engagement pin or pins 65 into and from the respective sliding guide 66 so as to enable the picking up from and the coupling of the retention elements 13a, 13b with the respective grip chuck 11.

To this end, each grip element 62 is advantageously associated with an actuation motor that is adapted to enable the rotation thereof about the axis 102.

The axial movement of the grip element 62 and the opening or closing of the first jaws 63 and of the second jaws 64 can be commanded by the same actuation motor or by different motor means.

The apparatus 1 comprises, furthermore, means for the relative movement of the grip chucks 11, in which the retention elements 13a are yet to be replaced, with respect to the automated means 10.

Advantageously, such relative movement means comprise control means adapted to actuate the movement of the grip chucks 11 along the movement circuit 12 in order to make the grip chucks 11, which are associated with retention elements 13a to be replaced, approach the automated means 10 in each instance.

Such movement is performed, conveniently, when the unloading device 20 of the automated means 10 is in the storage position and/or the loading device 30 is in the pick-up position.

According to a further aspect, the present invention relates to a method for replacing retention elements 13a from grip chucks 11.

Such grip chucks 11 can be moved along a movement circuit 12 and are intended to carry a respective preform picked up by a feeding device 2 to heating means 3 in order to transport it, in heated condition, to a device 4 for transferring the heated preforms and from there to a blow-molding device 5 that is adapted to form the preforms into respective containers by blow-molding.

According to the present invention, the method comprises:
a step of removal, by automated means 10, of the retention elements 13a to be replaced;_
a step of storing, by the automated means 10, the retention elements 13a which have been removed;
a step of picking up, by the automated means 10, retention elements 13b that are different from the retention elements 13a removed;
a step of coupling, by the automated means 10, the different retention elements 13b with a respective grip chuck 11.

The automated means 10 comprise an unloading device 20 and a loading device 30.

The unloading device 20 can be moved, on command, between a working position, in which it is intended to remove at least one retention element 13a from a respective grip chuck 11, and an unloading position, in which it stores, at a storage region 40, the (or each) one retention element 13a which has been removed from the respective grip chuck 11.

The loading device 30 can be moved, on command, between a pick-up position, in which it is intended to pick up at least one retention element 13b from a pick-up region 50, and a replacement position, in which it is intended to couple the (or each) retention element 13b taken from the pick-up region 50 with a respective grip chuck 11 from which, previously, the retention element 13a had been removed.

Advantageously, the removal step and the storage step provide for the removal and storage, substantially simultaneously, of respective retention elements 13a associated with at least two grip chucks 11.

Conveniently, the unloading step provides for at least two distinct working positions for the unloading device 20.

In each one of the at least two working positions, the unloading device 20 is adapted to remove at least one retention element 13a from at least one respective grip chuck 11.

Preferably, the pick-up step and the coupling step provide, substantially simultaneously, for the pick-up and coupling of respective retention elements 13b from and with at least two grip chucks 11, respectively.

Delving deeper into the details, the coupling step provides for at least two replacement positions of the loading device 30; in each one of the two replacement positions the loading device 30 is adapted to couple at least one retention element 13b with at least one respective grip chuck 11.

Advantageously, the method provides for a step of relative movement of the grip chucks 11 with respect to the automated means 10.

Preferably, such movement step comprises the movement of the grip chucks 11 along the movement circuit 12 in order to bring, in each instance, the grip chucks 11 associated with retention elements 13a to be replaced to the region of action of the automated means 10.

Such movement step is performed, conveniently, when the unloading device 20 of the automated means 10 is in the storage position and/or the loading device 30 is in the pick-up position.

All the characteristics of the invention, indicated above as advantageous, convenient or similar, may also be missing or be substituted by equivalent characteristics.

The individual characteristics set out with reference to general teachings or to specific embodiments may all be present in other embodiments or may substitute characteristics in such embodiments.

The invention, thus conceived, is susceptible of numerous modifications and variations, all of which are within the scope of the appended claims.

In practice the materials employed, provided they are compatible with the specific use, and the dimensions and shapes, may be any according to requirements.

Moreover, all the details may be substituted by other, technically equivalent elements.

The content of Italian patent application no. VR2013A000070, the priority of which is claimed in the present application, is referred to.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An apparatus (1) for obtaining plastic containers which comprises a device (2) for feeding preforms, a device (3) for heating the preforms picked up by said feeding device (2), a device (4) for transferring the preforms heated by said heating device (3) to a blow-molding device (5) that is adapted to form said preforms into respective containers by blow-molding, said apparatus (1) comprising a supporting framework (9) for a plurality of grip chucks (11) that can be moved along a movement circuit (12) and are intended to carry a respective preform picked up by said feeding device (2) to said heating means (3) in order to transport it, when heated, to said transfer device (4), said grip chucks (11) having a respective retention head (11a) that comprises at least one retention element (13a, 13b) designed to lock the neck of a respective preform into place, said apparatus (1) comprising, along the extension (101) of said movement circuit (12), automated means (10) for changing said retention elements (13a, 13b), said automated means (20) being adapted to remove and store said retention elements (13a) to be replaced and to pick up, and couple with a respective grip chuck (11), retention elements (13b) that are different from said retention elements (13a) to be replaced,
**characterized in that** said automated means (10) comprise an unloading device (20) moveable on command between a working position, in which it is adapted to remove at least one retention element (13a) from a respective grip chuck (11), and an unloading position, in which it stores, at a storage region (40), said at least one retention element (13a) removed from the respective grip chuck (11), said automated means (10) comprise a loading device (30) that can be moved on command between a pick-up position, in which it is adapted to pick up at least one retention element (13b) from a pick-up region (50), and a replacement position, in which it is adapted to couple said at least one retention element (13b) picked up from said pick-up region (50) with a respective grip chuck (11), said loading device (20) and said unloading device (30) are constituted by a single replacement element (10a) comprising a supporting element (61) supporting one or more grip elements (62) and being kinematically connected to an articulated movement arm (60), said retention elements (13a, 13b) being provided with one or more engagement pins (65) being inserteable in a respective sliding guide (66) defined at a respective grip chuck (11), said grip elements (62) being moveable in order to insert and disconnect the engagement pin or pins (65) into and from the respective sliding guide (66) so as to enable the picking up from and the coupling of the retention elements (13a, 13b) from and with the respective grip chuck (11).

2. The apparatus (1) according to claim 1, **characterized in that** said at least one retention element (13a, 13b) comprises a body (14a, 14b) for supporting the neck of a respective preform and an abutment body (15a, 15b) for unloading said heated preform onto said transfer device (4), said automated means (10) being adapted to change said supporting body (14a) or said abutment body (15a).

3. The apparatus (1) according to claim 1, **characterized in that** said at least one retention element (13a, 13b) comprises a supporting body (14a, 14b) for the neck of a respective preform and an abutment body (15a, 15b) for unloading said heated preform onto said transfer device (4), said automated means (10) being adapted to change said supporting body (14a) and said abutment body (15a).

4. The apparatus according to one or more of the preceding claims, **characterized in that** said grip chuck (11) is connected kinematically to first motor means adapted to actuate the angular rotation, about the longitudinal axis (100) of said grip chuck (11), of at least one portion of said retention element (13a, 13b).

5. The apparatus (1) according to one or more of the preceding claims, **characterized in that** said first motor means are adapted to actuate the angular rotation, about the longitudinal axis (100) of said grip chuck (11), of said supporting body (14a, 14b).

6. The apparatus (1) according to one or more of the preceding claims, **characterized in that** said unloading device (20), in said working position, is adapted to remove, substantially simultaneously, respective retention elements (13a) associated with at least two grip chucks (11).

7. The apparatus (1) according to one or more of the preceding claims, **characterized in that** said unloading device (20) can move between at least two distinct working positions, in each one of said at least two working positions said unloading device (20) being adapted to remove at least one retention element (13a) from at least one respective grip chuck (11).

8. The apparatus (1) according to one or more of the preceding claims, **characterized in that** said loading device (30), in said replacement position, is adapted to couple, substantially simultaneously, respective retention elements (13b) with at least two grip chucks (11).

9. The apparatus (1) according to one or more of the preceding claims, **characterized in that** said loading device (30) provides for at least two replacement po sitions and, in each one of said two replacement positions, is adapted to couple at least one retention element (13b) with at least one respective grip chuck (11).

10. The apparatus (1) according to one or more of the preceding claims, **characterized in that** it comprises means for the relative movement of said grip chucks (11) with respect to said automated means (10).

11. The apparatus (1) according to one or more of the preceding claims, **characterized in that** said relative movement means comprise control means adapted to actuate the movement of said grip chucks (11) along said movement circuit (12) in order to make the grip chucks (11) associated with retention elements (13a) to be replaced approach said automated means (10) in each instance.

12. A method for replacing retention elements (13a) from grip chucks (11) that can be moved along a movement circuit (101) and are intended to carry a respective preform picked up by a feeding device (2) to heating means (3) in order to transport it, when heated, to a device (4) for transferring the heated preforms to a blow-molding device (5) that is adapted to form said preforms into respective containers by blow-molding, said method comprising:
- a step of removal, by automated means (10), of said retention elements (13a) to be replaced;
- a step of storing, by said automated means (10), said retention elements (13a) removed;
- a step of picking up, by said automated means (10), retention elements (13b) that are different from said retention elements (13a) removed;
- a step of coupling, by said automated means (10), said different retention elements (13b) with a respective grip chuck (11);
said automated means (10) comprise an unloading device (20) moveable on command between a working position, in which it is adapted to remove at least one retention element (13a) from a respective grip chuck (11), and an unloading position, in which it stores, at a storage region (40), said at least one retention element (13a) removed from the respective grip chuck (11), said automated means (10) comprise a loading device (30) that can be moved on command between a pick-up position, in which it is adapted to pick up at least one retention element (13b) from a pick-up region (50), and a replacement position, in which it is adapted to couple said at least one retention element (13b) picked up from said pick-up region (50) with a respective grip chuck (11), said loading device (20) and said unloading device (30) are constituted by a single replacement element (10a) comprising a supporting element (61) supporting one or more grip elements (62) and being kinematically connected to an articulated movement arm (60), said retention elements (13a, 13b) being provided with one or more engagement pins (65) being inserteable in a respective sliding guide (66) defined at a respective grip chuck (11), said grip elements (62) being moveable in order to insert and disconnect the engagement pin or pins (65) into and from the respective sliding guide (66) so as to enable the picking up from and the coupling of the retention elements (13a, 13b) from and with the respective grip chuck (11).

13. The method according to claim 16, **characterized in that** said automated means (10) comprise an unloading device (20) that can be moved on command between a working position, in which it is intended to remove at least one retention element (13a) from a respective grip chuck (11), and an unloading position, in which it stores, at a storage region (40), said at least one retention element (13a) removed from the respective grip chuck (11).

14. The method according to one or more of claims 16 to 17, **characterized in that** said automated means (10) comprise a loading device (30) that can be moved on command between a pick-up position, in which it is intended to pick up at least one retention element (13b) from a pick-up region (50), and a replacement position, in which it is intended to couple said at least one retention element (13b) picked up from said pick-up region (50) with a respective grip chuck (11).

15. The method according to one or more of claims 16 to 18, **characterized in that** said removal step and said storage step provide for the removal and storage, substantially simultaneously, of respective retention elements (13a) associated with at least two grip chucks (11).

16. The method according to one or more of claims 16 to 19, **characterized in that** said unloading step provides for at least two distinct working positions for said unloading device (20), in each one of said at least two working positions said unloading device (20) being adapted to remove at least one retention element (13a) from at least one respective grip chuck (11).

17. The method according to one or more of claims 16 to 20, **characterized in that** said pick-up step and said coupling step provide, substantially simultaneously, for the pick-up and coupling of respective retention elements (13b) from and with at least two grip chucks (11), respectively.

18. The method according to one or more of claims 16 to 21, **characterized in that** said coupling step provides for at least two replacement positions of said loading device (30), in each one of said two replacement positions said loading device (30) being adapted to couple at least one retention element (13b) with at least one respective grip chuck (11).

19. The method according to one or more of claims 16 to 22, **characterized in that** it comprises a step of relative movement of said grip chucks (11) with respect to said automated means (10).

20. The method according to one or more of claims 16 to 23, **characterized in that** said movement step comprises the movement of said grip chucks (11) along said movement circuit (12) in order to bring, in each instance, the grip chucks (11) associated with retention elements (13a) to be replaced to the region of action of said automated means (10), said movement step being performed when said automated means (10) are in the storage step and/or in the pick-up step.

## Patentansprüche

1. Vorrichtung (1) zum Erhalten von Kunststoffbehältern, die eine Vorrichtung (2) zum Zuführen von Vorformen, eine Vorrichtung (3) zum Erwärmen der von der Zuführvorrichtung (2) aufgenommenen Vorformen, eine Vorrichtung (4) zum Überführen der von der Heizvorrichtung (3) erwärmten Vorformen an eine Blasformvorrichtung (5), die dazu ausgelegt ist, die Vorformen durch Blasformen zu entsprechenden Behältern zu formen, aufweist, wobei die Vorrichtung (1) einen Stützrahmen (9) für eine Vielzahl von Greif-Spannvorrichtungen (11) aufweist, die entlang eines Bewegungskreises (12) bewegt werden können und dazu vorgesehen sind, eine entsprechende Vorform, die von der Zuführvorrichtung (2) aufgenommen wurde, an die Heizvorrichtung (3) zu tragen, um sie, wenn sie erwärmt ist, an die Überführungsvorrichtung (4) zu transportieren, wobei die Greif-Spannvorrichtungen (11) einen entsprechenden Haltekopf (11a) haben, der wenigstens ein Halteelement (13a, 13b) aufweist, das dazu ausgelegt ist, den Hals einer entsprechenden Vorform zu arretieren, wobei die Vorrichtung (1) entlang der Ausdehnung (101) des Bewegungskreises (12) automatisierte Mittel (10) zum Wechseln der Halteelemente (13a, 13b) aufweist, wobei die automatisierten Mittel (20) dazu ausgelegt sind, die Halteelemente (13a), die zu ersetzen sind, zu entfernen und zu lagern, und Halteelemente (13b), die sich von den zu ersetzenden Halteelementen (13a) unterscheiden, aufzunehmen und mit einer entsprechenden Greif-Spannvorrichtung (11) zu verbinden,
**dadurch gekennzeichnet, dass**
die automatisierten Mittel (10) eine Entladevorrichtung (20) aufweisen, die auf Befehl zwischen einer Arbeitsposition, in der sie dazu ausgelegt ist, wenigstens ein Halteelement (13a) von einer entsprechenden Greif-Spannvorrichtung (11) zu entfernen, und einer Entladeposition, in der sie das wenigstens eine Halteelement (13a), das von der entsprechenden Greif-Spannvorrichtung (11) entfernt worden ist, in einem Lagerbereich (40) lagert, bewegbar ist, wobei die automatisierten Mittel (10) eine Ladevorrichtung (30) aufweisen, die auf Befehl zwischen einer Aufnahmeposition, in der sie dazu ausgelegt ist, wenigstens ein Halteelement (13b) von einem Aufnahmebereich (50) aufzunehmen, und einer Ersetzungsposition, in der sie dazu ausgelegt ist, das wenigstens eine Halteelement (13b), das von dem Aufnahmebereich (50) aufgenommen wurde, mit einer entsprechenden Greif-Spannvorrichtung (11) zu verbinden, bewegt werden kann, wobei die Ladevorrichtung (20) und die Entladevorrichtung (30) von einem einzigen Ersetzungselement (10a) gebildet werden, das ein Stützelement (61) aufweist, welches ein oder mehrere Greifelemente (62) stützt und mit einem gelenkigen Bewegungsarm (60) kinematisch verbunden ist, wobei die Halteelemente (13a, 13b) mit einem oder mehreren Eingriffstiften (65) versehen sind, die in eine entsprechende Gleitführung (66) einführbar sind, die an einer entsprechenden Greif-Spannvorrichtung (11) definiert ist, wobei die Greifelemente (62) bewegbar sind, um den Eingriffstift oder die Eingriffstifte (65) in die entsprechende Gleitführung (66) einzuführen und davon zu trennen, um das Aufnehmen und das Verbinden der Halteelemente (13a, 13b) von und mit der entsprechenden Greif-Spannvorrichtung (11) zu ermöglichen.

2. Vorrichtung (1) nach Anspruch 1, **dadurch gekennzeichnet, dass** das wenigstens eine Halteelement (13a, 13b) einen Körper (14a, 14b) zum Stützen des Halses einer entsprechenden Vorform aufweist, und einen Anschlagskörper (15a, 15b) zum Entladen der erwärmten Vorform auf die Überführungsvorrichtung (4), wobei die automatisierten Mittel (10) dazu ausgelegt sind, den Stützkörper (14a) oder den Anschlagskörper (15a) zu wechseln.

3. Vorrichtung (1) nach Anspruch 1, **dadurch gekennzeichnet, dass** das wenigstens eine Halteelement (13a, 13b) einen Stützkörper (14a, 14b) für den Hals einer entsprechenden Vorform und einen Anschlagskörper (15a, 15b) zum Entladen der erwärmten Vorform auf die Überführungsvorrichtung (4) aufweist, wobei die automatisierten Mittel (10) dazu ausgelegt sind, den Stützkörper (14a) und den Anschlagskörper (15a) zu wechseln.

4. Vorrichtung nach einem oder mehreren der vorhergehenden Ansprüche, **dadurch gekennzeichnet, dass** die Greif-Spannvorrichtung (11) kinematisch mit ersten Motormitteln verbunden ist, die dazu ausgelegt sind, die Winkeldrehung von wenigstens einem Teil des Halteelements (13a, 13b) um die Längsachse (100) der Greif-Spannvorrichtung (11) auszulösen.

5. Vorrichtung (1) nach einem oder mehreren der vorhergehenden Ansprüche, **dadurch gekennzeichnet, dass** die ersten Motormittel dazu ausgelegt sind, die Winkeldrehung des Stützkörpers (14a, 14b) um die Längsachse (100) der Greif-Spannvorrichtung (11) auszulösen.

6. Vorrichtung (1) nach einem oder mehreren der vorhergehenden Ansprüche, **dadurch gekennzeichnet, dass** die Entladevorrichtung (20) in der Arbeitsposition dazu ausgelegt ist, entsprechende Halteelemente (13a), die zu wenigstens zwei Greif-Spannvorrichtungen (11) gehören, im Wesentlichen gleichzeitig zu entfernen.

7. Vorrichtung (1) nach einem oder mehreren der vorhergehenden Ansprüche, **dadurch gekennzeichnet, dass** sich die Entladevorrichtung (20) zwischen wenigstens zwei individuellen Arbeitspositionen bewegen kann, wobei die Entladevorrichtung (20) in jeder der wenigstens zwei Arbeitspositionen dazu ausgelegt ist, wenigstens ein Halteelement (13a) von wenigstens einer entsprechenden Greif-Spannvorrichtung (11) zu entfernen.

8. Vorrichtung (1) nach einem oder mehreren der vorhergehenden Ansprüche, **dadurch gekennzeichnet, dass** die Ladevorrichtung (30) in der Ersetzungsposition dazu ausgelegt ist, entsprechende Halteelemente (13b) im Wesentlichen gleichzeitig mit wenigstens zwei Greif-Spannvorrichtungen (11) zu verbinden.

9. Vorrichtung (1) nach einem oder mehreren der vorhergehenden Ansprüche, **dadurch gekennzeichnet, dass** die Ladevorrichtung (30) wenigstens zwei Ersetzungspositionen vorsieht, und in jeder der zwei Ersetzungspositionen dazu ausgelegt ist, wenigstens ein Halteelement (13b) mit wenigstens einer entsprechenden Greif-Spannvorrichtung (11) zu verbinden.

10. Vorrichtung (1) nach einem oder mehreren der vorhergehenden Ansprüche, **dadurch gekennzeichnet, dass** sie Mittel für die relative Bewegung der Greif-Spannvorrichtungen (11) bezüglich der automatisierten Mittel (10) aufweist.

11. Vorrichtung (1) nach einem oder mehreren der vorhergehenden Ansprüche, **dadurch gekennzeichnet, dass** die Mittel für die relative Bewegung Steuermittel aufweisen, die dazu ausgelegt sind, die Bewegung der Greif-Spannvorrichtungen (11) entlang des Bewegungskreises (12) auszulösen, um zu veranlassen, dass die Greif-Spannvorrichtungen (11), die zu zu ersetzenden Halteelementen (13a) gehören, sich jeweils den automatisierten Mitteln (10) nähern.

12. Verfahren zum Ersetzen von Halteelementen (13a) von Greif-Spannvorrichtungen (11), die entlang eines Bewegungskreises (101) bewegt werden können und dazu vorgesehen sind, eine entsprechende Vorform, die von einer Zuführvorrichtung (2) aufgenommen wurde, an Heizmittel (3) zu tragen, um sie, wenn sie erwärmt ist, an eine Vorrichtung (4) zu transportieren, um die erwärmten Vorformen an eine Blasformvorrichtung (5) zu überführen, die dazu ausgelegt ist, die Vorformen durch Blasformen zu entsprechenden Behältern zu formen, wobei das Verfahren beinhaltet:
- einen Schritt des Entfernens der zu ersetzenden Halteelemente (13a) durch automatisierte Mittel (10),
- einen Schritt des Lagerns der entfernten Halteelemente (13a) durch die automatisierten Mittel (10),
- einen Schritt des Aufnehmens von Halteelementen (13b), die sich von den entfernten Halteelementen (13a) unterscheiden, durch die automatisierten Mittel (10);
- einen Schritt des Verbindens der verschiedenen Halteelemente (13b) mit einer entsprechenden Greif-Spannvorrichtung (11) durch die automatisierten Mittel;
wobei die automatisierten Mittel (10) eine Entladevorrichtung (20) aufweisen, die auf Befehl zwischen einer Arbeitsposition, in der sie dazu ausgelegt ist, wenigstens ein Halteelement (13a) von einer entsprechenden Greif-Spannvorrichtung (11) zu entfernen, und einer Entladeposition, in der sie das wenigstens eine Halteelement (13a), das von der entsprechenden Greif-Spannvorrichtung (11) entfernt worden ist, in einem Lagerbereich (40) lagert, bewegbar ist, wobei die automatisierten Mittel (10) eine Ladevorrichtung (30) aufweisen, die auf Befehl zwischen einer Aufnahmeposition, in der sie dazu ausgelegt ist, wenigstens ein Halteelement (13b) von einem Aufnahmebereich (50) aufzunehmen, und einer Ersetzungsposition, in der sie dazu ausgelegt ist, das wenigstens eine Halteelement (13b), das von dem Aufnahmebereich (50) aufgenommen wurde, mit einer entsprechenden Greif-Spannvorrichtung (11) zu verbinden, bewegt werden kann, wobei die Ladevorrichtung (20) und die Entladevorrichtung (30) von einem einzigen Ersetzungselement (10a) gebildet werden, das ein Stützelement (61) aufweist, welches ein oder mehrere Greifelemente (62) stützt und mit einem gelenkigen Bewegungsarm (60) kinematisch verbunden ist, wobei die Halteelemente (13a, 13b) mit einem oder mehreren Eingriffstiften (65) versehen sind, die in eine entsprechende Gleitführung (66) einführbar sind, die an einer entsprechenden Greif-Spannvorrichtung (11) definiert ist, wobei die Greifelemente (62) bewegbar sind, um den Eingriffstift oder die Eingriffstifte (65) in die entsprechende Gleitführung (66) einzuführen und davon zu trennen, um das Aufnehmen und das Verbinden der Halteelemente (13a, 13b) von und mit der entsprechenden Greif-Spannvorrichtung (11) zu ermöglichen.

13. Verfahren nach Anspruch 16, **dadurch gekennzeichnet, dass** die automatisierten Mittel (10) eine Entladevorrichtung (20) aufweisen, die auf Befehl zwischen einer Arbeitsposition, in der vorgesehen ist, dass sie wenigstens ein Halteelement (13a) von einer entsprechenden Greif-Spannvorrichtung (11) entfernt, und einer Entladeposition, in der sie das wenigstens eine Halteelement (13a), das von der entsprechenden Greif-Spannvorrichtung (11) entfernt worden ist, in einem Lagerbereich (40) lagert, bewegt werden kann.

14. Verfahren nach einem oder mehreren der Ansprüche 16 bis 17, **dadurch gekennzeichnet, dass** die automatisierten Mittel (10) eine Ladevorrichtung (30) aufweisen, die auf Befehl zwischen einer Aufnahmeposition, in der sie dazu vorgesehen ist, wenigstens ein Halteelement (13b) von einem Aufnahmebereich (50) aufzunehmen, und einer Ersetzungsposition, in der sie dazu vorgesehen ist, das wenigstens eine Halteelement (13b), das von dem Aufnahmebereich (50) aufgenommen wurde, mit einer entsprechenden Greif-Spannvorrichtung (11) zu verbinden, bewegt werden kann.

15. Verfahren nach einem oder mehreren der Ansprüche 16 bis 18, **dadurch gekennzeichnet, dass** der Schritt des Entfernens und der Schritt des Lagerns das im Wesentlichen gleichzeitige Entfernen und Lagern entsprechender Halteelemente (13a), die zu wenigstens zwei Greif-Spannvorrichtungen (11) gehören, beinhaltet.

16. Verfahren nach einem oder mehreren der Ansprüche 16 bis 19, **dadurch gekennzeichnet, dass** der Schritt des Entladens wenigstens zwei individuelle Arbeitspositionen für die Entladevorrichtung (20) vorsieht, wobei in jeder der wenigstens zwei Arbeitspositionen die Entladevorrichtung (20) dazu ausgelegt ist, wenigstens ein Halteelement (13a) von wenigstens einer entsprechenden Greif-Spannvorrichtung (11) zu entfernen.

17. Verfahren nach einem oder mehreren der Ansprüche 16 bis 20, **dadurch gekennzeichnet, dass** der Schritt des Aufnehmens und der Schritt des Verbindens das im Wesentlichen gleichzeitige Aufnehmen und Verbinden entsprechender Halteelemente (13b) von bzw. mit wenigstens zwei Greif-Spannvorrichtungen (11) vorsehen.

18. Verfahren nach einem oder mehreren der Ansprüche 16 bis 21, **dadurch gekennzeichnet, dass** der Schritt des Verbindens wenigstens zwei Ersetzungspositionen der Ladevorrichtung (30) vorsieht, wobei die Ladevorrichtung (30) in jeder der zwei Ersetzungspositionen dazu ausgelegt ist, wenigstens ein Halteelement (13b) mit wenigstens einer entsprechenden Greif-Spannvorrichtung (11) zu verbinden.

19. Verfahren nach einem oder mehreren der Ansprüche 16 bis 22, **dadurch gekennzeichnet, dass** es einen Schritt der relativen Bewegung der Greif-Spannvorrichtungen (11) bezüglich der automatisierten Mittel (10) beinhaltet.

20. Verfahren nach einem oder mehreren der Ansprüche 16 bis 23, **dadurch gekennzeichnet, dass** der Schritt des Bewegens die Bewegung der Greif-Spannvorrichtungen (11) entlang des Bewegungskreises (12) beinhaltet, um die Greif-Spannvorrichtungen (11), die zu den zu ersetzenden Halteelementen (13a) gehören, jeweils in den Aktionsbereich der automatisierten Mittel (10) zu bringen, wobei der Schritt des Bewegens durchgeführt wird, wenn sich die automatisierten Mittel (10) beim Schritt des Lagerns und/oder beim Schritt des Aufnehmens befinden.

## Revendications

1. Appareil (1) pour obtenir des contenants en plastique qui comporte un dispositif (2) pour acheminer des préformes, un dispositif (3) pour chauffer les préformes ramassées par ledit dispositif d'acheminement (2), un dispositif (4) pour transférer les préformes chauffées par ledit dispositif de chauffage (3) vers un dispositif de moulage par soufflage (5) qui est adapté pour donner auxdites préformes des formes de contenants respectifs par moulage par soufflage, ledit appareil (1) comportant un bâti (9) pour une pluralité de mandrins de préhension (11) qui peuvent être déplacés le long d'un circuit de déplacement (12) et sont destinés à supporter une préforme respective ramassée par ledit dispositif d'acheminement (2) jusqu'auxdits moyens de chauffage (3) afin de la transporter, lorsqu'elle est chauffée, jusqu'audit dispositif de transfert (4), lesdits mandrins de préhension (11) ayant une tête de retenue (11a) respective qui comporte au moins un élément de retenue (13a, 13b) conçu pour bloquer en place le col d'une préforme respective, ledit appareil (1) comportant, le long de l'extension (101) dudit circuit de déplacement (12), des moyens automatisés (10) pour changer lesdits éléments de retenue (13a, 13b), lesdits moyens automatisés (20) étant adaptés pour retirer et stocker lesdits éléments de retenue (13a) à remplacer et à ramasser, et coupler avec un mandrin de préhension (11) respectif, des éléments de retenue (13b) qui sont différents desdits éléments de retenue (13a) à remplacer,
**caractérisé en ce que** lesdits moyens automatisés (10) comportent un dispositif de déchargement (20) mobile sur instruction entre une position de travail, dans laquelle il est adapté pour retirer au moins un élément de retenue (13a) d'un mandrin de préhension (11) respectif, et une position de déchargement, dans laquelle il stocke, au niveau d'une zone de stockage (40), ledit au moins un élément de retenue (13a) retiré du mandrin de préhension (11) respectif, lesdits moyens automatisés (10) comportent un dispositif de chargement (30) qui peut être déplacé sur instruction entre une position de ramassage, dans laquelle il est adapté pour ramasser au moins un élément de retenue (13b) à partir d'une zone de ramassage (50), et une position de remplacement, dans laquelle il est adapté pour coupler ledit au moins un élément de retenue (13b) ramassé à partir de ladite zone de ramassage (50) à un mandrin de préhension (11) respectif, ledit dispositif de chargement (20) et ledit dispositif de déchargement (30) sont constitués d'un seul élément de remplacement (10a) comportant un élément de support (61) supportant un ou plusieurs éléments de préhension (62) et étant cinématiquement relié à un bras à mouvement articulé (60), lesdits éléments de retenue (13a, 13b) étant pourvus d'une ou plusieurs goupilles de prise (65) pouvant être insérées dans un guide de coulissement (66) respectif défini sur un mandrin de préhension (11) respectif, lesdits éléments de préhension (62) étant mobiles afin d'insérer et de séparer la goupille ou les goupilles de prise (65) dans et depuis le guide de coulissement (66) respectif de manière à permettre le ramassage depuis et le couplage des éléments de retenue (13a, 13b) depuis et avec le mandrin de préhension (11) respectif.

2. Appareil (1) selon la revendication 1, **caractérisé en ce que** ledit au moins un élément de retenue (13a, 13b) comporte un corps (14a, 14b) pour supporter le col d'une préforme respective et un corps de butée (15a, 15b) pour décharger ladite préforme chauffée sur ledit dispositif de transfert (4), lesdits moyens automatisés (10) étant adaptés pour changer ledit corps de support (14a) ou ledit corps de butée (15a).

3. Appareil (1) selon la revendication 1, **caractérisé en ce que** ledit au moins un élément de retenue (13a, 13b) comporte un corps de support (14a, 14b) pour le col d'une préforme respective et un corps de butée (15a, 15b) pour décharger ladite préforme chauffée sur ledit dispositif de transfert (4), lesdits moyens automatisés (10) étant adaptés pour changer ledit corps de support (14a) et ledit corps de butée (15a).

4. Appareil selon une ou plusieurs des revendications précédentes, **caractérisé en ce que** ledit mandrin de préhension (11) est relié cinématiquement à des premiers moyens moteurs adaptés pour actionner la rotation angulaire, autour de l'axe longitudinal (100) dudit mandrins de préhension (11), d'au moins une partie dudit élément de retenue (13a, 13b).

5. Appareil (1) selon une ou plusieurs des revendications précédentes, **caractérisé en ce que** lesdits premiers moyens moteurs sont adaptés pour actionner la rotation angulaire, le long de l'axe longitudinal (100) dudit mandrin de préhension (11), dudit corps de support (14a, 14b).

6. Appareil (1) selon une ou plusieurs des revendications précédentes, **caractérisé en ce que** ledit dispositif de déchargement (20), dans ladite position de travail, est adapté pour retirer, de manière sensiblement simultanée, des éléments de retenue (13a) respectifs associés à au moins deux mandrins de préhension (11).

7. Appareil (1) selon une ou plusieurs des revendications précédentes, **caractérisé en ce que** ledit dispositif de déchargement (20) peut se déplacer entre au moins deux positions de travail distinctes, dans chacune desdites au moins deux positions de travail, ledit dispositif de déchargement (20) étant adapté pour retirer au moins un élément de retenue (13a) d'au moins un mandrin de préhension (11) respectif.

8. Appareil (1) selon une ou plusieurs des revendications précédentes, **caractérisé en ce que** ledit dispositif de chargement (30), dans ladite position de remplacement, est adapté pour coupler, de manière sensiblement simultanée, des éléments de retenue (13b) respectifs, avec au moins deux mandrins de préhension (11).

9. Appareil (1) selon une ou plusieurs des revendications précédentes, **caractérisé en ce que** ledit dispositif de chargement (30) permet au moins deux positions de remplacement et, dans chacune desdites deux positions de remplacement, est adapté pour coupler au moins un élément de retenue (13b) à au moins un mandrin de préhension (11) respectif.

10. Appareil (1) selon une ou plusieurs des revendications précédentes, **caractérisé en ce qu'**il comporte des moyens pour le déplacement relatif desdits mandrin de préhension (11) par rapport auxdits moyens automatisés (10).

11. Appareil (1) selon une ou plusieurs des revendications précédentes, **caractérisé en ce que** lesdits moyens de déplacement relatif comportent des moyens de commande adaptés pour actionner le déplacement desdits mandrins de préhension (11) le long dudit circuit de déplacement (12) afin de rapprocher les mandrins de préhension (11) associés à des éléments de retenue (13a) à remplacer desdits moyens automatisés (10) dans chaque cas.

12. Procédé pour remplacer des éléments de retenue (13a) à partir de mandrins de préhension (11) qui peuvent être déplacés le long d'un circuit de déplacement (101) et sont destinés à supporter une préforme respective ramassée par un dispositif d'acheminement (2) jusqu'à des moyens de chauffage (3) afin de la transporter, lorsqu'elle est chauffée, jusqu'à un dispositif (4) pour transférer les préformes chauffées jusqu'à un dispositif de moulage par soufflage (5) qui est adapté pour donner auxdites préformes des formes de contenants respectifs par moulage par soufflage, ledit procédé comportant :
- une étape de retrait, par des moyens automatisés (10), desdits éléments de retenue (13a) à remplacer,
- une étape de stockage, par lesdits moyens automatisés (10), desdits éléments de retenue (13a) retirés,
- une étape de ramassage, par lesdits moyens automatisés (10), d'éléments de retenue (13b) qui sont différents desdits éléments de retenue (13a) retirés,
- une étape de couplage, par lesdits moyens automatisés (10), desdits différents éléments de retenue (13b) avec un mandrin de préhension (11) respectif,
lesdits moyens automatisés (10) comportent un dispositif de déchargement (20) mobile sur instruction entre une position de travail, dans laquelle il est adapté pour retirer au moins un élément de retenue (13a) d'un mandrin de préhension (11) respectif, et une position de déchargement, dans laquelle il stocke, au niveau d'une zone de stockage (40), ledit au moins un élément de retenue (13a) retiré du mandrin de préhension (11) respectif, lesdits moyens automatisés (10) comportent un dispositif de chargement (30) qui peut être déplacé sur instruction entre une position de ramassage, dans laquelle il est adapté pour ramasser au moins un élément de retenue (13b) à partir d'une zone de ramassage (50), et une position de remplacement, dans laquelle il est adapté pour coupler ledit au moins un élément de retenue (13b) ramassé à partir de ladite zone de ramassage (50) avec un mandrin de préhension (11) respectif, ledit dispositif de chargement (20) et ledit dispositif de déchargement (30) sont constitués d'un seul élément de remplacement (10a) comportant un élément de support (61) supportant un ou plusieurs éléments de préhension (62) et étant cinématiquement reliés à un bras à mouvement articulé (60), lesdits éléments de retenue (13a, 13b) étant pourvus d'une ou plusieurs goupilles de prise (65) pouvant être insérées dans un guide de coulissement (66) respectif défini sur un mandrin de préhension (11) respectif, lesdits éléments de préhension (62) étant mobiles afin d'insérer et de séparer la goupille ou les goupilles de prise (65) dans et depuis le guide de coulissement (66) respectif de manière à permettre le ramassage depuis et le couplage des éléments de retenue (13a, 13b) depuis et avec le mandrin de préhension (11) respectif.

13. Procédé selon la revendication 16, **caractérisé en ce que** lesdits moyens automatisés (10) comportent un dispositif de déchargement (20) qui peut être déplacé sur instruction entre une position de travail, dans laquelle il est destiné à retirer au moins un élément de retenue (13a) d'un mandrin de préhension (11) respectif, et une position de déchargement, dans laquelle il stocke, au niveau d'une zone de stockage (40), ledit au moins un élément de retenue (13a) retiré du mandrin de préhension (11) respectif.

14. Procédé selon une ou plusieurs des revendications 16 à 17, **caractérisé en ce que** lesdits moyens automatisés (10) comportent un dispositif de chargement (30) qui peut être déplacé sur instruction entre une position de ramassage, dans laquelle il est destiné à ramasser au moins un élément de retenue (13b) à partir d'une zone de ramassage (50), et une position de remplacement, dans laquelle il est destiné à coupler ledit au moins un élément de retenue (13b) ramassé à partir de ladite zone de ramassage (50) avec un mandrin de préhension (11) respectif.

15. Procédé selon une ou plusieurs des revendications 16 à 18, **caractérisé en ce que** ladite étape de retrait et ladite étape de stockage permettent le retrait et le stockage, de manière sensiblement simultanée, d'éléments de retenue (13a) respectifs associés à au moins deux mandrins de préhension (11).

16. Procédé selon une ou plusieurs des revendications 16 à 19, **caractérisé en ce que** ladite étape de déchargement permet au moins deux positions de travail distinctes pour ledit dispositif de déchargement (20), dans chacune desdites au moins deux positions de travail, ledit dispositif de déchargement (20) étant adapté pour retirer au moins un élément de retenue (13a) à partir d'au moins un mandrin de préhension (11) respectif.

17. Procédé selon une ou plusieurs des revendications 16 à 20, **caractérisé en ce que** ladite étape de ramassage et ladite étape de couplage assurent, de manière sensiblement simultanée, le ramassage et le couplage d'éléments de retenue (13b) respectifs depuis et avec au moins deux mandrins de préhension (11), respectivement.

18. Procédé selon une ou plusieurs des revendications 16 à 21, **caractérisé en ce que** ladite étape de couplage permet au moins deux positions de remplacement dudit dispositif de chargement (30), dans chacune desdites deux positions de remplacement, ledit dispositif de chargement (30) étant adapté pour coupler au moins un élément de retenue (13b) avec au moins un mandrin de préhension (11) respectif.

19. Procédé selon une ou plusieurs des revendications 16 à 22, **caractérisé en ce qu'**il comporte une étape de déplacement relatif desdits mandrins de préhension (11) par rapport auxdits moyens automatisés (10).

20. Procédé selon une ou plusieurs des revendications 16 à 23, **caractérisé en ce que** ladite étape de déplacement comporte le déplacement desdits mandrins de préhension (11) le long dudit circuit de déplacement (12) afin d'amener, dans chaque cas, les mandrins de préhension (11) associés à des éléments de retenue (13a) à remplacer jusqu'à la zone d'action desdits moyens automatisés (10), ladite étape de déplacement étant réalisée lorsque lesdits moyens automatisés (10) sont à l'étape de stockage et/ou à l'étape de ramassage.
